# EUROPÄISCHE PATENTSCHRIFT

(11) **EP 3 134 201 B1**
(45) Veröffentlichungstag und Bekanntmachung des Hinweises auf die Patenterteilung: **13.03.2024**
(21) Anmeldenummer: 15717171.1
(22) Anmeldetag: 20.04.2015
(51) Int. Cl.: B01F 27/87, B01F 35/45, B01F 35/75, B01F 35/92, B01F 35/93, B01J 19/00, B01J 19/18, B01J 4/00

(54) **MEHRSTUFIGER RÜHRREAKTOR MIT VERRINGERTER RÜCKVERMISCHUNG**
MULTISTAGE MIXING REACTOR WITH REDUCED BACKMIXING
RÉACTEUR AGITATEUR À PLUSIEURS ÉTAGES AVEC UN MÉLANGE DE RETOUR RÉDUIT

(30) Priorität: 22.04.2014 DE 102014105615
(43) Veröffentlichungstag der Anmeldung: 01.03.2017
(73) Patentinhaber: Suzhou Skywell Healthcare Information Co., Ltd., Jiangsu 215021 (CN)
(72) Erfinder: FALß, Sebastian, 50937 Köln (DE); MLECZKO, Leslaw, 41542 Dormagen (DE); BOOS, Karl-Robert, 51399 Burscheid (DE); BUCHHOLZ, Sigurd, 50767 Köln (DE)
(74) Vertreter: Simmons & Simmons LLP (Munich)
(86) Internationale Anmeldenummer: PCT/EP2015/058514
(87) Internationale Veröffentlichungsnummer: WO 2015/162091

(56) Entgegenhaltungen:
- EP-A1- 1 273 341
- EP-A2- 0 960 651
- WO-A1-2006/126891
- DE-A1-102004 003 925

## Beschreibung

Die Arbeiten, die zu dieser Erfindung geführt haben, wurden gemäß der Finanzhilfevereinbarung Nr. 246461 im Zuge des Siebten Rahmenprogramms der Europäischen Union (FP7/2007-2013) gefördert.

Die vorliegende Erfindung betrifft einen mehrstufigen Rührreaktor, umfassend eine Mehrzahl von zueinander benachbarten Reaktionskammern und Rührelementen zum Durchmischen des Inhalts mindestens einer der Reaktionskammern, wobei zwischen benachbarten Reaktionskammern jeweils mindestens eine mittels Verschlussmitteln verschließbare Öffnung vorgesehen ist, so dass im geöffneten Zustand eine fluidische Verbindung zwischen den benachbarten Reaktionskammern erhalten wird und im geschlossenen Zustand die benachbarten Reaktionskammern voneinander getrennt sind.

Für viele chemische Apparate ist es vorteilhaft, eine gute Durchmischung mit einer engen Verweilzeitverteilung in kontinuierlicher Fahrweise zu kombinieren. Vorteile der guten Vermischung sind beispielsweise die Verringerung von Stoffübergangswiderständen, eine schnellere Homogenisierung oder das Suspendieren von Feststoffen.

Eine enge Verweilzeitverteilung ermöglicht häufig eine höhere Produktqualität und eine höhere Raum-Zeit-Ausbeute. Zu den Vorteilen einer kontinuierlichen Fahrweise zählen unter anderem die Verstetigung der Produktqualität, höhere Ressourceneffizienz, geringere Rüstzeiten, ein höherer Automatisierungsgrad und geringere Hold-up Volumina.

Mögliche Anwendungen, auf die das genannte Anforderungsprofil zutreffen kann, sind die kontinuierliche Verarbeitung von ein- oder mehrphasigen Flüssigkeiten, Dispersionen, Gas-Flüssig-Mischungen, überkritischen Fluiden oder Mischungen dieser Materialien in verschiedenen verfahrenstechnischen Apparaten wie chemischen oder biologischen Reaktoren sowie Apparaten zur Absorption, Extraktion oder Kristallisation.

In vielen chemischen Prozessen ist zusätzlich der erzielbare Wärmeaustausch ein zu beachtender Parameter. Mikrostrukturierte Apparate bieten hier die Möglichkeit, sehr hohe spezifische Wärmeaustauschflächen zu erreichen. Aufgrund ihres geringen Volumens sind sie jedoch nicht für Reaktionen mit langer Verweilzeit geeignet, wenn ein gewisser Durchsatz erreicht werden soll. Ferner stellt die Gefahr von Fouling und Verblockungen durch im Prozess vorhandene Feststoffe aufgrund der kleinen Kanaldurchmesser eine große Herausforderung dar.

Da Feststoffe, z.B. in Form eines heterogenen Katalysators oder unlöslicher Reaktionsprodukte, in vielen verfahrenstechnischen Prozessen als erwünschte oder unerwünschte Bestandteile vorliegen, kann das Handling von suspendierten Feststoffen eine zusätzliche Anforderung an das Prozessequipment darstellen.

In der Praxis kann das definierte Anforderungsprofil am ehesten durch eine Kaskade in Reihe geschalteter, kontinuierlich betriebener Rührkessel realisiert werden. Unter bestimmten Bedingungen kann jedoch eine kompaktere Bauweise des Apparates nötig sein. Ein solcher Anwendungsfall ist z.B. der Einbau in kompakten, modularen Produktionsanlagen.

Zusätzlich kann es von Vorteil sein, wenn die Anzahl der Dichtstellen, insbesondere solcher mit dynamischen Dichtungen, minimiert wird. Dies ist z.B. dann der Fall, wenn der Apparat gefährliche Stoffe enthält oder Gase wie Wasserstoff, die aufgrund ihrer hohen Diffusivität andernfalls aufwändige Konstruktionen zur Abdichtung benötigen.

Es ist weiterhin bekannt, dass das definierte Anforderungsprofil in bestimmten Anwendungsfällen auch durch die Unterteilung eines Strömungsrohres in mehrere Kompartimente, die jeweils durch geeignete Rührer gemischt werden und die durch Öffnungen miteinander verbunden sind, erfüllt werden kann.

Jedoch hängt die Leistungsfähigkeit eines solchen Apparates stark von den Betriebsbedingungen ab. Eine hohe Rührerdrehzahl, lange Verweilzeiten und große Öffnungen zwischen den einzelnen Kompartimenten führen zu einem höheren Grad an Rückvermischung und damit zu einer breiteren Verweilzeitverteilung (z.B. L. Zhang, Q. Pan, G.L. Rempel, Residence Time Distribution in a Multistage Agitated Contactor with Newtonian Fluids: CFD Prediction and Experimental Validation: Industrial & Engineering Chemistry Research, Ind. Eng. Chem. Res. 46 2007, 3538-3546.).

Solche Apparate finden vor allem in der Extraktionstechnik breite Anwendung. Theoretisch kann die Rückvermischung durch die Verwendung sehr kleiner Öffnungen zwischen angrenzenden Kompartimenten minimiert werden. In diesem Fall steigt jedoch der Druckverlust im Apparat und der Austrag von Feststoffen ist nicht mehr möglich, so dass diese Maßnahme in der praktischen Anwendung häufig ungeeignet ist.

DE 32 13 628 A1 beschreibt eine Kontaktvorrichtung, bei der es sich um ein senkrechtes langes zylindrisches Gehäuse mit geschlossenen Enden handelt, das durch waagerechte Prallplatten in mehrere Einzelkammern unterteilt ist, mit Zugang von einer Kammer zur anderen durch konzentrische kreisförmige Öffnungen, die axial zentriert in den Prallwänden sind, mit einer kontinuierlich drehbaren Welle, die sich konzentrisch mit den Prallwänden innerhalb des Gehäuse erstreckt, mit mindestens einer Rühreinrichtung, die an die Welle befestigt ist, in jeder Kammer, wobei die Welle in den kreisförmigen Öffnungen ringförmige Öffnungen in den Prallwänden ergibt, derart, dass das Verhältnis des Rückströmungsausmaßes zum Beschickungsausmaß durch die Öffnungen kleiner als 1,5 ist. Beschrieben wird auch ein Verfahren zur kontinuierlichen Herstellung von Arylensulfidpolymeren, bei dem Reaktionskomponenten, die geeignet zur Herstellung von Poly(arylensulfid) sind, in mindestens eine erste Kammer des vorstehend beschriebenen Kontaktgefäßes eingespeist werden, wodurch ein Reaktionsgemisch gebildet wird, das durch die Kammern der Kontaktvorrichtung geführt wird, während jede Kammer unter Bedingungen zur Bildung von Arylensulfidpolymeren gehalten wird, und Arylensulfidpolymeres aus einer Kammer gewonnen wird, die entfernt von der Kammer liegt, in die die Ausgangsreaktionskomponenten eingeführt werden. Der erzielbare Rückvermischungsgrad in derartigen Apparaten ist für Anwendungen, die eine sehr enge Verweilzeitverteilung benötigen, häufig zu hoch; insbesondere, wenn das Reaktorvolumen klein (einige Liter oder weniger) ist und die realisierbare Stufenzahl damit begrenzt ist.

WO 2006/126891 (EP 1 904 225) offenbart beispielsweise einen zylindrischen Reaktor für die kontinuierliche Behandlung einer gerührten Stoffzusammensetzung, die mindestens zwei Komponenten umfasst, umfassend eine Zahl von Reaktorkammern, die in einer hauptsächlich vertikalen Säule angeordnet sind, getrennt durch Bodenplatten, während der Transport der Stoffzusammensetzung von einer beliebigen Reaktorkammer im stationären Zustand angeordnet ist, um zu der angrenzenden Kammer unterhalb zu erfolgen, wobei jede Reaktorkammer mit einem Flügelmechanismus versehen ist. Der Flügelmechanismus umfasst ein ringförmiges Glied, das mit der Reaktorkammer konzentrisch ist und eine vertikale Verlängerung aufweist und mindestens ein bewegbares Rührglied, das angeordnet ist, um eine vertikale Bewegungskomponente in dem Stoff in der Kammer herbeizuführen. Der Transport ist von einer Kammer zu der nächsten Kammer angeordnet, um periodisch durch eine Öffnung mit einer Schieberklappe in der Bodenplatte jeder Kammer stattzufinden. Ein solcher Apparat hat jedoch den Nachteil, dass an jeder Kammer ein zusätzliches bewegliches Teil und damit verbunden auch eine Dichtung vorzusehen ist.

Es kann damit festgehalten werden, dass die Kombination von guter Durchmischung mit einer engen Verweilzeitverteilung für verfahrenstechnische Stoffsysteme, die eine lange Verweilzeit benötigen und in denen ein gewisses Maß an Feststoffen vorliegt, in derzeit verfügbaren Apparaten in kontinuierlicher Fahrweise nur unzureichend realisiert werden kann.

DE102004003925 A1 offenbart einen mehrstufigen Rührreaktor gemäß dem Oberbegriff des Anspruchs 1.

EP1273341 A1 offenbart einen Mischer mit koaxialem Antrieb von Rührelementen und Verschlusselementen.

Die vorliegende Erfindung hat sich die Aufgabe gestellt, einen Apparat bereitzustellen, welcher die genannten Anforderungen kombiniert. Vorzugsweise stellt dieser Apparat weiterhin eine möglichst hohe spezifische Wärmeaustauschfläche zur Verfügung.

Erfindungsgemäß gelöst wird diese Aufgabe durch einen mehrstufigen Rührreaktor gemäß dem Wortlaut des Anspruchs 1, umfassend eine Mehrzahl von zueinander benachbarten Reaktionskammern sowie Rührelemente zum Durchmischen des Inhalts mindestens einer der Reaktionskammern, wobei zwischen benachbarten Reaktionskammern jeweils mindestens eine mittels Verschlussmitteln verschließbare Öffnung vorgesehen ist, so dass im geöffneten Zustand eine fluidische Verbindung zwischen den benachbarten Reaktionskammern erhalten wird und im geschlossenen Zustand die benachbarten Reaktionskammern voneinander getrennt sind.

Der Reaktor zeichnet sich dadurch aus, dass mindestens eines der Verschlussmittel mit einer aus dem Rührreaktor herausgeführten Betätigungsstange verbunden ist, die Betätigungsstange durch Drehen und/oder Verschieben zwischen mindestens einer ersten Position und einer zweiten Position hin- und herbetätigbar ist, wobei in der ersten Position mit der Betätigungsstange verbundene Verschlussmittel einen geöffneten Zustand der ihnen zugeordneten Öffnung bewirken und in der zweiten Position mit der Betätigungsstange verbundene Verschlussmittel einen geschlossenen Zustand der ihnen zugeordneten Öffnung bewirken.

Der erfindungsgemäße Rührreaktor kann selbstverständlich nicht nur für chemische Reaktionen im engeren Sinne eingesetzt werden, sondern auch beispielsweise für Extraktionen und dergleichen.

Grundsätzlich lässt sich der erfindungsgemäße mehrstufige Rührreaktor als ein in mehrere Kammern unterteiltes Strömungsrohr ansehen. Die für den Durchfluss von einer Kammer zur nächsten zur Verfügung stehenden Öffnungsflächen können durch den mittels Betätigungsstange(n) bedienten Öffnungs- und Schließmechanismus dynamisch verändert werden. Durch ein periodisches Umschalten von geöffnetem zu geschlossenem Zustand wird die Rückvermischung zwischen den einzelnen Reaktionskammern verringert.

Es ist ebenfalls möglich, dass die Betätigungsstange zwischen der ersten und der zweiten Position verweilt und dadurch die Öffnungen zwischen einzelnen Reaktionskammern stufenlos verstellbar ist.

Eventuell auftretende Feststoffe können im erfindungsgemäßen Rührreaktor ebenfalls von einer Reaktionskammer in die nächste transportiert werden und aus dem Reaktor ausgetragen werden.

In vielen Fällen kann eine verbesserte Durchmischung durch den Einsatz von Strombrechern in den einzelnen Reaktionskammern erreicht werden. Diese verhindern das Mitrotieren von Flüssigkeiten und erhöhen die Turbulenz in den Kammern. Eine Phasentrennung aufgrund von Dichtedifferenzen kann so verhindert werden.

Damit der erfindungsgemäße Rührreaktor ein möglichst breites Anwendungsfeld abdecken kann, ist es möglich, ihn modular und damit flexibel zu konstruieren. So kann der Reaktor so konstruiert sein, dass die Anzahl der Reaktionskammern ohne umfangreiche Änderungen am Reaktor angepasst werden kann. Dieses kann dadurch erreicht werden, dass die Böden der Reaktionskammern nicht fest mit einer Reaktorinnenwand verbunden werden. Vielmehr werden sie durch demontierbare Abstandshalter miteinander verbunden und als Gesamtbauteil beispielsweise in einen Doppelrohrmantel eingeführt. Der Bodenabstand kann so durch Austausch der Abstandshalter leicht angepasst werden. Eine derartige Konstruktion erlaubt nicht nur die Anpassung der Kammerzahl, sondern auch die Einstellung verschiedener Kammergrößen, zum Beispiel wenn am Einlass eine höhere Wärmeaustauschfläche als am Auslass benötigt wird, wie im Falle einer anfangs sehr schnell ablaufende chemische Reaktion.

Vorteilhafte Weiterbildungen und weitere Aspekte der vorliegenden Erfindung werden nachfolgend geschildert. Sie können beliebig miteinander kombiniert werden, sofern sich aus dem Kontext nicht eindeutig das Gegenteil ergibt.

In einer Ausführungsform des erfindungsgemäßen Rührreaktors sind sämtliche vorliegenden Verschlussmittel der Öffnungen mit einer gemeinsamen Betätigungsstange verbunden.

Die Rührelemente werden mittels einer gemeinsamen Rührwelle angetrieben und die Rührwelle stellt gleichzeitig die Betätigungsstange der Verschlussmittel dar.

In einer weiteren Ausführungsform des erfindungsgemäßen Rührreaktors ist die Betätigungsstange verschiebbar ausgeführt und die Verschlussmittel sind als Stopfen an Bodenwänden der Reaktionskammern ausgeführt.

In einer weiteren Ausführungsform des erfindungsgemäßen Rührreaktors ist die Betätigungsstange drehbar ausgeführt und die Verschlussmittel sind von den Öffnungen wegschwenkbar ausgeführt.

In einer weiteren Ausführungsform des erfindungsgemäßen Rührreaktors ist mindestens eine der Bodenwände als Wärmetauscher ausgeführt, durch den ein Wärmeüberträgermedium hindurchströmt. Somit kann neben der Reaktorwand auch der Boden einer Reaktionskammer zum Wärmetransport genutzt werden. Beispielsweise umfasst ein solcher Boden neben der Öffnung für eine Rührwelle und der gegebenenfalls vorhanden Öffnung für Verschlussmittel Zu- und Abläufe, durch die das Temperiermedium ein- bzw. ausströmen kann und über die die einzelnen Böden mittels geeigneter Verbindungselemente hinsichtlich des Flusses des Wärmeübeträgermediums miteinander verbunden werden können. Die Stromführung am Boden der Reaktorkammer kann auch mittels geeigneter Einbauten beeinflusst werden.

In einer weiteren Ausführungsform des erfindungsgemäßen Rührreaktors umfasst mindestens eine der Reaktionskammern weiterhin eine Heiz- und/oder Kühlspirale. Solche Heiz- und/oder Kühlspiralen können auch gleichzeitig als Strombrecher in den Reaktionskammern fungieren.

In einer weiteren Ausführungsform des erfindungsgemäßen Rührreaktors umfasst mindestens eine der Reaktionskammern zusätzliche Zuführungen und/oder Abläufe, durch die Substanzen eingeführt und/oder ausgetragen werden können. Es ist möglich, dass mehrere Reaktionskammern durch zusätzliche Zuführungen und/oder Abläufe miteinander verbunden sind.

Zusätzliche Zuführungen und/oder Abläufe können erwünscht sein, um nicht alle Reaktionskomponenten am Beginn des Reaktors zuzugeben, sondern entlang des Reaktors. Auf diese Weise können in einer chemischen Reaktion zum Beispiel unerwünschten Neben- oder Folgereaktionen unterdrückt werden. Analog kann es gewünscht sein, entstehende Stoffe abzutrennen.

Ein weiterer Aspekt der vorliegenden Erfindung ist ein Verfahren zur Durchführung einer chemischen Reaktion, wobei die Reaktion in einem erfindungsgemäßen Rührreaktor durchgeführt wird und die Betätigungsstange oder die Betätigungsstangen zwischen der ersten Position und der zweiten Position hin- und herbewegt werden.

In einer Ausführungsform des erfindungsgemäßen Verfahrens wird die Reaktion zumindest zeitweise mit einer konstanten Menge von in den Reaktor eingebrachten und aus dem Reaktor ausgetragenen Substanzen durchgeführt. Diese Variante lässt sich mit dem Stichwort "konstanter Feedstrom" umschreiben. Bei inkompressiblem Reaktorinhalt sollte demnach ein konstanter Strom von einer Reaktionskammer in die nächste möglich sein. Dies kann grundsätzlich auf drei Wegen geschehen: ein Spalt ist zwischen den Bodenwänden und einer Rührwelle vorgesehen (sofern vorhanden), ein Spalt ist zwischen den Bodenwänden und dem Reaktormantel vorgesehen (sofern vorhanden) sowie mittels eines teilweise geöffneten Öffnungs- und Schließmechanismus. Sind Feststoffe vorhanden, kann der Öffnungs- und Schließmechanismus periodisch betätigt werden, um den Feststoffaustrag durch die vergrößerte Öffnung zu ermöglichen und während der anderen Phasen die Rückvermischung zu unterdrücken.

In einer weiteren Ausführungsform des erfindungsgemäßen Verfahrens werden in den Reaktor Substanzen eingebracht und ausgetragen, wenn die Betätigungsstange oder Betätigungsstangen sich in der ersten Position befinden und keine Substanzen eingebracht und ausgetragen werden, wenn die Betätigungsstange oder Betätigungsstangen sich in der zweiten Position befinden. Diese Variante lässt sich mit dem Stichwort "dynamischer Feedstrom" umschreiben. Der Reaktor wird mit zeitlich veränderlichem Feedstrom betrieben, wobei der Feedstrom idealerweise über eine geeignete Steuerung mit dem Öffnungs- und Schließmechanismus synchronisiert wird. Wenn der Öffnungs- und Schließmechanismus zum Vergrößern der Öffnung betätigt wird, wird auch der Feedstrom erhöht. Bei geschlossenem Öffnungs- und Schließmechanismus wird der Feedstrom dementsprechend verringert. Diese Betriebsweise bietet den Vorteil, dass in den Phasen, wenn der Öffnungs- und Schließmechanismus geöffnet ist, die Rückvermischung zwischen einzelnen Reaktionskammern durch den erhöhten Apparatedurchfluss unterdrückt wird.

In einer weiteren Ausführungsform des erfindungsgemäßen Verfahrens ist der Rührreaktor ein erfindungsgemäßer Rührreaktor mit den folgenden Merkmalen: es umfasst mindestens eine der Reaktionskammern zusätzliche Zuführungen und/oder Abläufe, durch die Substanzen eingeführt und/oder ausgetragen werden können und weiterhin sind mehrere Reaktionskammern durch zusätzliche Zuführungen und/oder Abläufe miteinander verbunden. Es wird in wenigstens einer Reaktionskammer wenigstens ein Betriebszustand überwacht, bei einer zuvor bestimmten Abweichung des Betriebszustandes von einem zuvor bestimmten Wert für diesen Betriebszustand werden die in diese Reaktionskammer einmündenden Zuführungen geschlossen und die ursprünglich durch diese Zuführungen transportierten Substanzen werden in eine andere Reaktionskammer eingeführt.

Vorzugsweise ist der überwachte Betriebszustand der Druckabfall von einer Reaktionskammer zur benachbarten Reaktionskammer.

Diese Reaktionsführung ermöglicht es, bei Verstopfungen oder anderen Störungen in einer Reaktionskammer diese stillzulegen und die Stoffströme im Reaktor an dieser Kammer vorbeizuleiten. So kann die Reaktion an einer nachfolgenden Stelle weitergeführt werden.

Die vorliegende Erfindung betrifft schließlich ebenfalls die Verwendung eines erfindungsgemäßen Rührreaktors zur Durchführung von chemischen Reaktionen.

Die vorliegende Erfindung wird anhand der nachfolgenden Figuren näher erläutert, ohne jedoch darauf beschränkt zu sein. Es zeigen:
FIG. 1 einen ersten erfindungsgemäßen mehrstufigen Rührreaktor in einer ersten Konfiguration
FIG. 2 den ersten erfindungsgemäßen mehrstufigen Rührreaktor in einer zweiten Konfiguration
FIG. 3 einen zweiten, nicht erfindungsgemäßen mehrstufigen Rührreaktor in einer ersten Konfiguration
FIG. 4 den zweiten, nicht erfindungsgemäßen mehrstufigen Rührreaktor in einer zweiten Konfiguration
FIG. 5 einen dritten, nicht dritten erfindungsgemäßen mehrstufigen Rührreaktor in einer ersten Konfiguration
FIG. 6 den dritten, nicht erfindungsgemäßen mehrstufigen Rührreaktor in einer zweiten Konfiguration

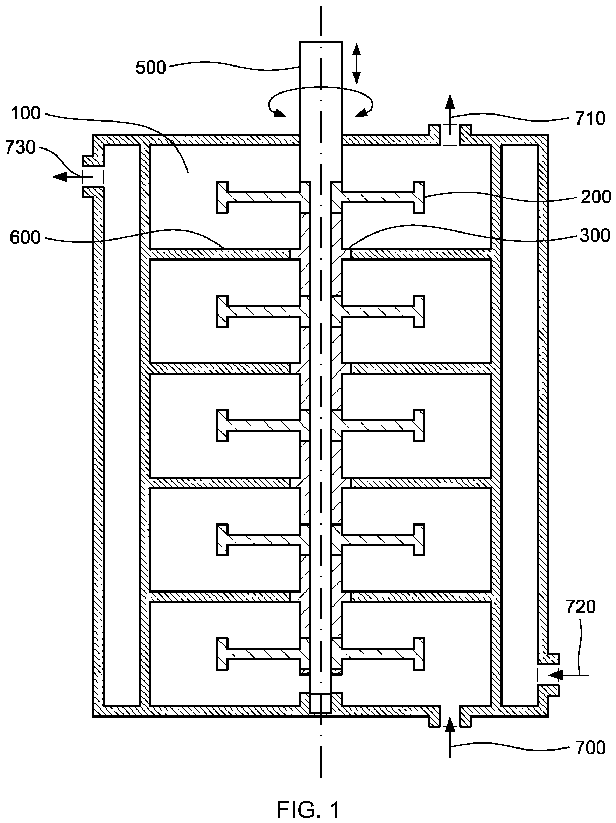

FIG. 1 zeigt einen ersten erfindungsgemäßen mehrstufigen Rührreaktor in einer ersten Konfiguration, bei der die einzelnen Reaktionskammern nicht in fluidischer Verbindung zueinander stehen. Der Reaktor ist als zylindrischer Tank mit einem Einlass-Stoffstrom 700 und einem Auslass-Stoffstrom 710 für die Edukte beziehungsweise Produkte der Reaktion dargestellt. Innerhalb des Reaktors liegen einzelne Reaktionskammern 100 vor, welche durch Bodenwände 600 gegeneinander abgegrenzt sind. Jede der Reaktionskammern weist ein Rührelement 200 auf, mit welchem der Inhalt der Kammer durchmischt werden kann. Die Rührelemente sind dabei auf einer zentralen Welle angeordnet, welche über einen Motor (nicht dargestellt) angetrieben wird. Wie im Folgenden ausgeführt werden wird, fungiert in dieser Ausführungsform des erfindungsgemäßen Rührreaktors die Antriebswelle gleichzeitig als die Betätigungsstange 500 zum Bedienen der Verschlussmittel zwischen den Kammern 100.

Die Bodenwände 600 der Reaktionskammern 100 weisen Durchführungen für die Antriebswelle beziehungsweise die Betätigungsstange 500 auf. Neben den Rührelementen 200 befinden sich Verschlussmittel 300 auf der Welle/der Betätigungsstange 500. In der ersten Position der Betätigungsstange 500, welche in FIG. 1 dargestellt ist, verschließen die Verschlussmittel 300 die einzelnen Reaktionskammern 100 gegeneinander, so dass kein Stoffaustausch stattfinden kann. Durch eine translatorische Bewegung der Betätigungsstange 500 können die Verschlussmittel 300 jedoch die einzelnen Bodenwände 600 öffnen.

Der Rührreaktor ist weiterhin von einem Heiz-/Kühlmantel umgeben. Über den Einlass-Stoffstrom 720 und den Auslass-Stoffstrom 730 lässt sich ein Wärmeüberträgermedium ein- und ausführen, so dass eine Temperaturbeeinflussung der in dem Reaktor ablaufenden chemischen Reaktion möglich ist.

Der Vorteil der hier gezeigten Ausführungsform liegt darin, dass aufgrund der Doppelfunktion von Rührwelle und Betätigungsstange 500 nur eine Dichtung gegenüber der Außenumgebung erforderlich ist.

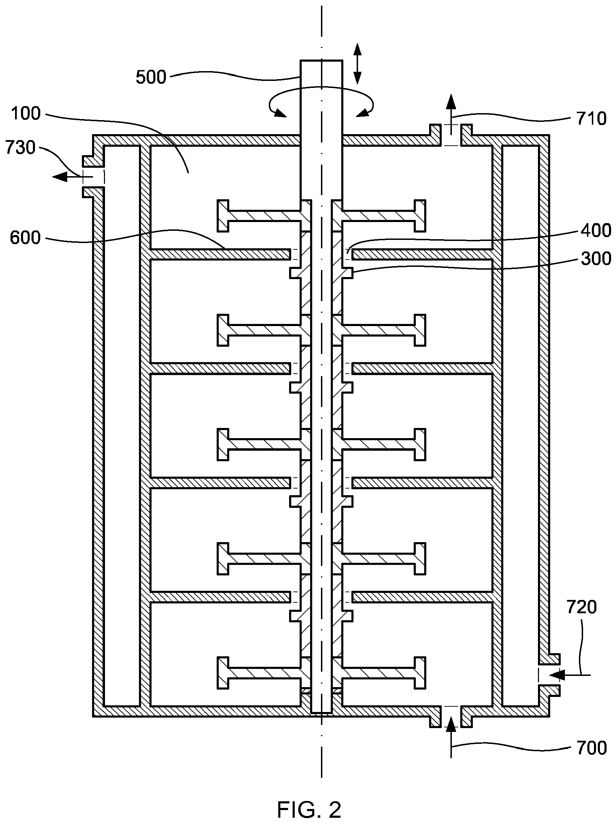

FIG. 2 zeigt den ersten erfindungsgemäßen mehrstufigen Rührreaktor in einer zweiten Konfiguration, bei der die einzelnen Reaktionskammern in fluidischer Verbindung zueinander stehen. Durch eine Verschiebung der Rührwelle/der Betätigungsstange 500 wurden die Verschlusselemente 300 von den Bodenwänden 600 wegbewegt und Öffnungen 400 freigegeben.

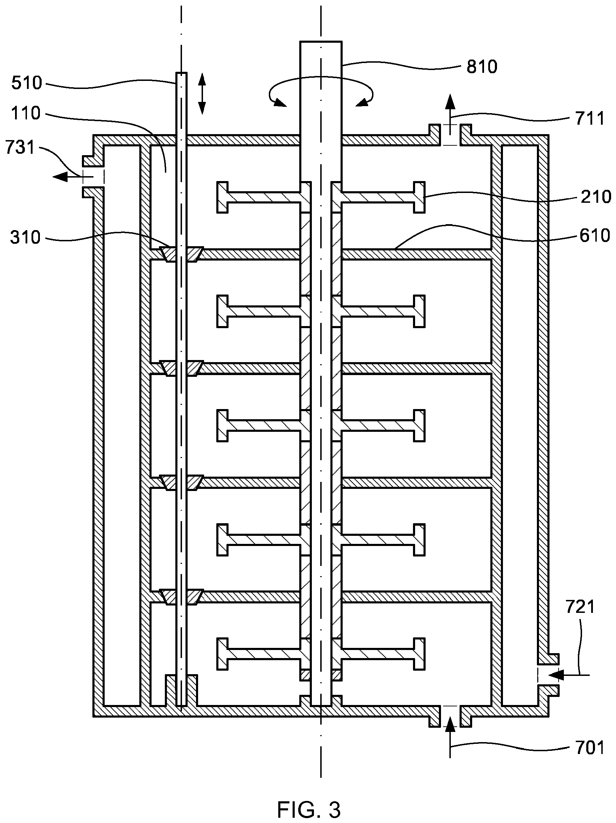

FIG. 3 zeigt einen zweiten, nicht erfindungsgemäßen mehrstufigen Rührreaktor in einer ersten Konfiguration, bei der die einzelnen Reaktionskammern nicht in fluidischer Verbindung zueinander stehen. Der Reaktor ist als zylindrischer Tank mit einem Einlass-Stoffstrom 701 und einem Auslass-Stoffstrom 711 für die Edukte beziehungsweise Produkte der Reaktion dargestellt.

Innerhalb des Reaktors liegen einzelne Reaktionskammern 110 vor, welche durch Bodenwände 610 gegeneinander abgegrenzt sind. Jede der Reaktionskammern weist ein Rührelement 210 auf, mit welchem der Inhalt der Kammer durchmischt werden kann. Die Rührelemente sind dabei auf einer zentralen Welle 810 angeordnet, welche über einen Motor (nicht dargestellt) angetrieben wird.

Die Bodenwände 610 der Reaktionskammern 110 weisen Durchführungen für die Antriebswelle 810 auf. Die Öffnungen zum Durchführen der Welle 810 werden hier mittels geeigneter Dicht- oder Lagerelemente verschlossen.

Die Verschlussmittel 310 sind bei diesem Reaktor mit einer Betätigungsstange 510 verbunden, welche von der Welle 810 verschieden ist. In der ersten Position der Betätigungsstange 510, welche in FIG. 3 dargestellt ist, verschließen die Verschlussmittel 310 die einzelnen Reaktionskammern 110 nach Art eines Stopfens gegeneinander, so dass kein Stoffaustausch stattfinden kann. Durch eine translatorische Bewegung der Betätigungsstange 510 können die Verschlussmittel 310 jedoch die einzelnen Bodenwände 610 öffnen.

Der Rührreaktor ist weiterhin von einem Heiz-/Kühlmantel umgeben. Über den Einlass-Stoffstrom 721 und den Auslass-Stoffstrom 731 lässt sich ein Wärmeüberträgermedium ein- und ausführen, so dass eine Temperaturbeeinflussung der in dem Reaktor ablaufenden chemischen Reaktion möglich ist.

Der Vorteil dessen ist, dass jede Dichtung gegenüber der Außenumgebung nur eine Bewegungsform (rotatorisch oder translatorisch) abdichten muss.

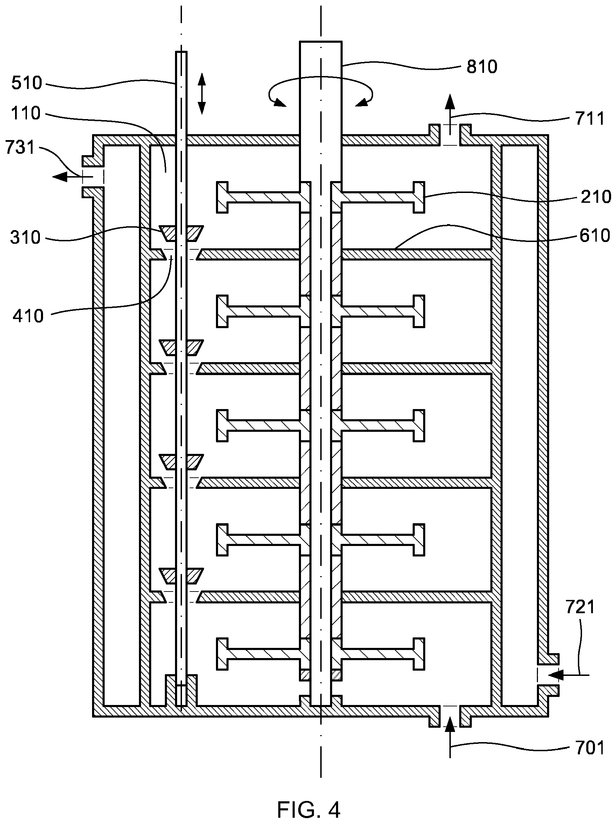

FIG. 4 zeigt den zweiten, nicht erfindungsgemäßen mehrstufigen Rührreaktor in einer zweiten Konfiguration, bei der die einzelnen Reaktionskammern in fluidischer Verbindung zueinander stehen. Durch eine Verschiebung der Betätigungsstange 510 wurden die Verschlusselemente 310 von den Bodenwänden 610 wegbewegt und Öffnungen 410 freigegeben.

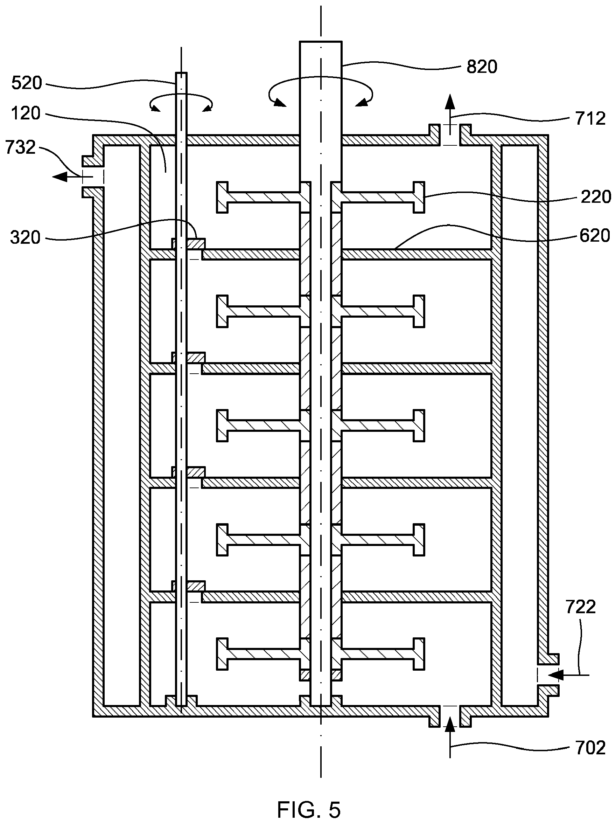

FIG. 5 zeigt einen dritten, nicht erfindungsgemäßen mehrstufigen Rührreaktor in einer ersten Konfiguration, bei der die einzelnen Reaktionskammern nicht in fluidischer Verbindung zueinander stehen. Der Reaktor ist als zylindrischer Tank mit einem Einlass-Stoffstrom 702 und einem Auslass-Stoffstrom 712 für die Edukte beziehungsweise Produkte der Reaktion dargestellt.

Innerhalb des Reaktors liegen einzelne Reaktionskammern 120 vor, welche durch Bodenwände 620 gegeneinander abgegrenzt sind. Jede der Reaktionskammern weist ein Rührelement 220 auf, mit welchem der Inhalt der Kammer durchmischt werden kann. Die Rührelemente sind dabei auf einer zentralen Welle 820 angeordnet, welche über einen Motor (nicht dargestellt) angetrieben wird.

Die Bodenwände 620 der Reaktionskammern 120 weisen Durchführungen für die Antriebswelle 820 auf. Die Öffnungen zum Durchführen der Welle 820 werden hier mittels geeigneter Dicht- oder Lagerelemente verschlossen.

Die Verschlussmittel 320 sind bei diesem Reaktor mit einer Betätigungsstange 520 verbunden, welche von der Welle 820 verschieden ist. In der ersten Position der Betätigungsstange 520, welche in FIG. 5 dargestellt ist, verschließen die Verschlussmittel 320 die einzelnen Reaktionskammern 120 nach Art eines schwenkbaren Deckels gegeneinander, so dass kein Stoffaustausch stattfinden kann. Durch eine rotatorische Bewegung der Betätigungsstange 520 können die Verschlussmittel 320 jedoch die einzelnen Bodenwände 620 öffnen.

Der Rührreaktor ist weiterhin von einem Heiz-/Kühlmantel umgeben. Über den Einlass-Stoffstrom 722 und den Auslass-Stoffstrom 732 lässt sich ein Wärmeüberträgermedium ein- und ausführen, so dass eine Temperaturbeeinflussung der in dem Reaktor ablaufenden chemischen Reaktion möglich ist.

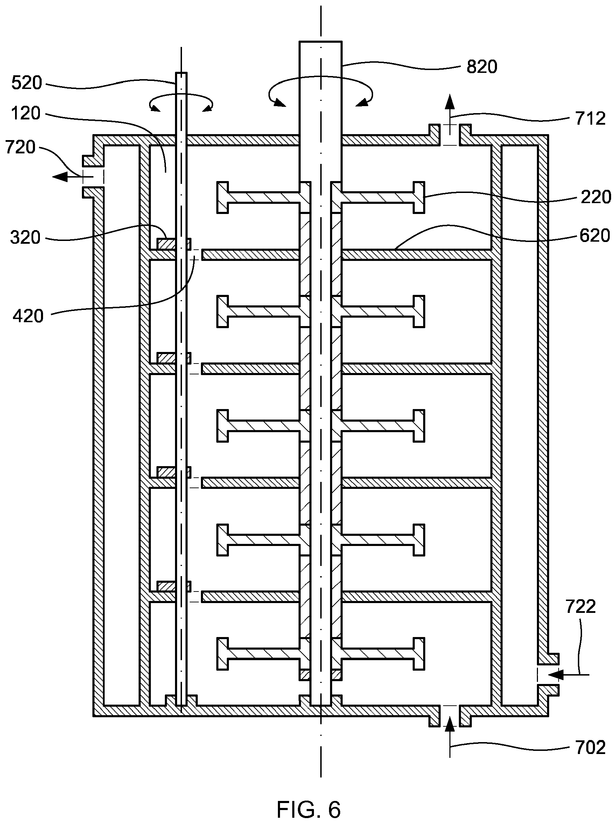

FIG. 6 zeigt den dritten, nicht erfindungsgemäßen mehrstufigen Rührreaktor in einer zweiten Konfiguration, bei der die einzelnen Reaktionskammern in fluidischer Verbindung zueinander stehen. Durch eine Rotation der Betätigungsstange 520 wurden die Verschlusselemente 320 von den Bodenwänden 620 wegbewegt und Öffnungen 420 freigegeben.

Obwohl die in FIG. 1 bis 6 gezeigten erfindungsgemäßen Rührreaktoren als aufrecht stehend und mit einer Fließrichtung der Edukt- beziehungsweise Produktströme von unten nach oben dargestellt sind, sind grundsätzlich alle Betriebsweisen der erfindungsgemäßen Rührreaktoren unabhängig von der Apparateorientierung und der Strömungsrichtung. Die Durchströmung von unten nach oben (bezogen auf die Richtung der Schwerkraft) kann vorteilhaft sein, wenn man ein Gas/Flüssig-Gemisch bei langsamer Strömungsgeschwindigkeit im Gleichstrom führen möchte. Ein horizontaler Betrieb ermöglicht die Ausbildung einer Gasphase über der Flüssigphase, was das Abziehen gasförmiger Nebenprodukte ermöglicht. Die Durchströmung von oben nach unten wiederum bietet Vorteile, wenn Feststoffe ausgetragen werden müssen.

## Patentansprüche

1. Mehrstufiger Rührreaktor, umfassend:
eine Mehrzahl von zueinander benachbarten Reaktionskammern (100, 110, 120);
Rührelemente (200, 210, 220) zum Durchmischen des Inhalts mindestens einer der Reaktionskammern (100, 110, 120);
wobei zwischen benachbarten Reaktionskammern (100, 110, 120) jeweils mindestens eine mittels Verschlussmitteln (300, 310, 320) verschließbare Öffnung (400, 410, 420) vorgesehen ist, so dass im geöffneten Zustand eine fluidische Verbindung zwischen den benachbarten Reaktionskammern (100, 110, 120) erhalten wird und im geschlossenen Zustand die benachbarten Reaktionskammern (100, 110, 120) voneinander getrennt sind;
wobei mindestens eines der Verschlussmittel (300, 310, 320) mit einer aus dem Rührreaktor herausgeführten Betätigungsstange (500, 510, 520) verbunden ist,
die Betätigungsstange (500, 510, 520) durch Drehen und/oder Verschieben zwischen mindestens einer ersten Position und einer zweiten Position hin- und herbetätigbar ist, wobei in der ersten Position mit der Betätigungsstange (500, 510, 520) verbundene Verschlussmittel (300, 310, 320) einen geöffneten Zustand der ihnen zugeordneten Öffnung bewirken und
in der zweiten Position mit der Betätigungsstange (500, 510, 520) verbundene Verschlussmittel (300, 310, 320) einen geschlossenen Zustand der ihnen zugeordneten Öffnung bewirken und
**dadurch gekennzeichnet, dass** die Rührelemente (200, 210, 220) mittels einer gemeinsamen Rührwelle angetrieben werden und wobei die Rührwelle gleichzeitig die Betätigungsstange (500, 510, 520) der Verschlussmittel (300, 310, 320) darstellt.

2. Rührreaktor gemäß Anspruch 1, wobei sämtliche vorliegenden Verschlussmittel (300, 310, 320) der Öffnungen (400, 410, 420) mit einer gemeinsamen Betätigungsstange (500, 510, 520) verbunden sind.

3. Rührreaktor gemäß Anspruch 1 oder 2, wobei die Betätigungsstange verschiebbar ausgeführt ist und die Verschlussmittel (300, 310, 320) als Stopfen an Bodenwänden (600, 610, 620) der Reaktionskammern (100, 110, 120) ausgeführt sind.

4. Rührreaktor gemäß Anspruch 1 oder 2, wobei die Betätigungsstange drehbar ausgeführt ist und die Verschlussmittel (300, 310, 320) von den Öffnungen wegschwenkbar ausgeführt sind.

5. Rührreaktor gemäß einem der Ansprüche 1 bis 4, wobei mindestens eine der Bodenwände (600, 610, 620) als Wärmetauscher ausgeführt ist, durch den ein Wärmeüberträgermedium hindurchströmt.

6. Rührreaktor gemäß einem der Ansprüche 1 bis 5, wobei mindestens eine der Reaktionskammern (100, 110, 120) weiterhin eine Heiz- und/oder Kühlspirale umfasst.

7. Rührreaktor gemäß einem der Ansprüche 1 bis 6, wobei mindestens eine der Reaktionskammern (100, 110, 120) zusätzliche Zuführungen und/oder Abläufe umfasst, durch die Substanzen eingeführt und/oder ausgetragen werden können.

8. Rührreaktor gemäß Anspruch 7, wobei mehrere Reaktionskammern (100, 110, 120) durch zusätzliche Zuführungen und/oder Abläufe miteinander verbunden sind.

9. Verfahren zur Durchführung einer chemischen Reaktion, **dadurch gekennzeichnet, dass** die Reaktion in einem Rührreaktor gemäß einem der Ansprüche 1 bis 8 durchgeführt wird und die Betätigungsstange oder die Betätigungsstangen (500, 510, 520) zwischen der ersten Position und der zweiten Position hin- und herbewegt werden.

10. Verfahren gemäß Anspruch 9, wobei die Reaktion zumindest zeitweise mit einer konstanten Menge von in den Reaktor eingebrachten und aus dem Reaktor ausgetragenen Substanzen durchgeführt wird.

11. Verfahren gemäß Anspruch 9, wobei in den Reaktor Substanzen eingebracht und ausgetragen werden, wenn die Betätigungsstange oder Betätigungsstangen (500, 510, 520) sich in der ersten Position befinden und keine Substanzen eingebracht und ausgetragen werden, wenn die Betätigungsstange oder Betätigungsstangen (500, 510, 520) sich in der zweiten Position befinden.

12. Verfahren gemäß einem der Ansprüche 9 bis 11, wobei der Rührreaktor ein Rührreaktor gemäß Anspruch 8 ist, in wenigstens einer Reaktionskammer (100, 110, 120) wenigstens ein Betriebszustand überwacht wird, bei einer zuvor bestimmten Abweichung des Betriebszustandes von einem zuvor bestimmten Wert für diesen Betriebszustand die in diese Reaktionskammer einmündenden Zuführungen geschlossen werden und die ursprünglich durch diese Zuführungen transportierten Substanzen in eine andere Reaktionskammer eingeführt werden.

13. Verfahren gemäß Anspruch 12, wobei der überwachte Betriebszustand der Druckabfall von einer Reaktionskammer (100, 110, 120) zur benachbarten Reaktionskammer ist.

14. Verwendung eines Rührreaktors gemäß einem der Ansprüche 1 bis 8 zur Durchführung von chemischen Reaktionen.

## Claims

1. A multi-stage stirred reactor, including:
a plurality of mutually adjacent reaction chambers (100, 110, 120);
stirring elements (200, 210, 220) for mixing the contents of at least one of the reaction chambers (100, 110, 120);
wherein at least one opening (400, 410, 420) closable by means of closing means (300, 310, 320) is provided between adjacent reaction chambers (100, 110, 120), so that, in the open state, a fluidic connection is maintained between the adjacent reaction chambers (100, 110, 120) and, in the closed state, the adjacent reaction chambers (100, 110, 120) are separated from one another;
wherein
at least one of the closing means (300, 310, 320) is connected to an actuation rod (500, 510, 520) led out of the stirred reactor,
the actuation rod (500, 510, 520) can be actuated back and forth between at least a first position and a second position by rotation and/or displacement, wherein closing means (300, 310, 320) connected to the actuation rod (500, 510, 520) in the first position bring about an open state of the opening assigned to them, and
closing means (300, 310, 320) connected to the actuation rod (500, 510, 520) in the second position bring about a closed state of the opening assigned to them, and
**characterized in that**
the stirring elements (200, 210, 220) are driven by means of a common stirring shaft and wherein the stirring shaft simultaneously represents the actuation rod (500, 510, 520) of the closing means (300, 310, 320).

2. The stirred reactor according to claim 1, wherein all present closing means (300, 310, 320) of the openings (400, 410, 420) are connected to a common actuation rod (500, 510, 520).

3. The stirred reactor according to claim 1 or 2, wherein the actuation rod is implemented in a displaceable manner and the closing means (300, 310, 320) are implemented as plugs on bottom walls (600, 610, 620) of the reaction chambers (100, 110, 120).

4. The stirred reactor according to claim 1 or 2, wherein the actuation rod is implemented in a rotatable manner and the closing means (300, 310, 320) are implemented in a manner pivotable away from the openings.

5. The stirred reactor according to any one of claims 1 to 4, wherein at least one of the bottom walls (600, 610, 620) is designed as a heat exchanger through which a heat transfer medium flows.

6. The stirred reactor according to any one of claims 1 to 5, wherein at least one of the reaction chambers (100, 110, 120) further comprises a heating and/or cooling coil.

7. The stirred reactor according to any one of claims 1 to 6, wherein at least one of the reaction chambers (100, 110, 120) comprises additional feeds and/or drains through which substances can be introduced and/or discharged.

8. The stirred reactor according to claim 7, wherein several reaction chambers (100, 110, 120) are connected to each other by additional feeds and/or drains.

9. A method for carrying out a chemical reaction, **characterized in that** the reaction is carried out in a stirred reactor according to any one of claims 1 to 8 and the actuation rod or rods (500, 510, 520) are moved back and forth between the first position and the second position.

10. The method according to claim 9, wherein the reaction is carried out at least temporarily with a constant amount of substances introduced into and discharged from the reactor.

11. The method according to claim 9, wherein substances are introduced and discharged into the reactor when the actuation rod or rods (500, 10, 520) are in the first position, and no substances are introduced and discharged when the actuation rod or rods (500, 510, 520) are in the second position.

12. The method according to one of claims 9 to 11, wherein the stirred reactor is a stirred reactor according to claim 8, at least one operating state is monitored in at least one reaction chamber (100, 110, 120), in the event of a previously determined deviation of the operating state from a previously determined value for this operating state, the feeds opening into this reaction chamber are closed, and the substances originally transported through these feeds are introduced into another reaction chamber.

13. The method according to claim 12, wherein the monitored operating condition is the pressure drop from one reaction chamber (100, 110, 120) to the adjacent reaction chamber.

14. A use of a stirred reactor according to any one of claims 1 to 8 for carrying out chemical reactions.

## Revendications

1. Réacteur à agitation multi-étage comprenant :
une pluralité de chambres de réaction (100, 110, 120) adjacentes entre elles ;
des éléments agitateurs (200, 210, 220) pour le mélange du contenu d'au moins une des chambres de réaction (100, 110, 120) ;
dans lequel, entre des chambres de réaction (100, 110, 120) adjacentes, est prévue respectivement au moins une ouverture (400, 410, 420) pouvant être obturée par des moyens d'obturation (300, 310, 320), de sorte que, dans l'état ouvert, une liaison fluidique est obtenue entre les chambres de réaction (100, 110, 120) adjacentes et, dans l'état fermé, les chambres de réaction (100, 110, 120) adjacentes sont séparées les unes des autres ;
dans lequel au moins un des moyens d'obturation (300, 310, 320) est relié avec une tige d'actionnement (500, 510, 520) guidée hors du réacteur à agitation,
la tige d'actionnement (500, 510, 520) peut être actionnée avec un mouvement de va-et-vient par rotation et/ou coulissement entre au moins une première position et une deuxième position,
dans lequel, dans la première position, les moyens d'obturation (300, 310, 320) reliés avec la tige d'actionnement (500, 510, 520) produisent un état ouvert de l'ouverture correspondante et
dans la deuxième position, les moyens d'obturation (300, 310, 320) reliés avec la tige d'actionnement (500, 510, 520) produisent un état fermé de l'ouverture correspondante et
**caractérisé en ce que**
les éléments agitateurs (200, 210, 220) sont entraînés au moyen d'un arbre d'agitation commun, et dans lequel l'arbre d'agitation constitue en même temps la tige d'actionnement (500, 510, 520) des moyens d'obturation (300, 310, 320).

2. Réacteur à agitation selon la revendication 1, dans lequel tous les moyens d'obturation (300, 310, 320) existants des ouvertures (400, 410, 420) sont reliés avec une tige d'actionnement (500, 510, 520) commune.

3. Réacteur à agitation selon la revendication 1 ou 2, dans lequel la tige d'actionnement est conçue de manière coulissante et les moyens d'obturation (300, 310, 320) sont conçus comme des bouchons sur des parois de fond (600, 610, 620) des chambres de réaction (100, 110, 120).

4. Réacteur à agitation selon la revendication 1 ou 2, dans lequel la tige d'actionnement est conçue de manière rotative et les moyens d'obturation (300, 310, 320) sont conçus de façon à pouvoir être pivotés loin des ouvertures.

5. Réacteur à agitation selon l'une des revendications 1 à 4, dans lequel au moins une des parois de fond (600, 610, 620) est conçue comme un échangeur thermique à travers lequel s'écoule un fluide de transmission de chaleur.

6. Réacteur à agitation selon l'une des revendications 1 à 5, dans lequel au moins une des chambres de réaction (100, 110, 120) comprend en outre une spirale de chauffage et/ou de refroidissement.

7. Réacteur à agitation selon l'une des revendications 1 à 6, dans lequel au moins une des chambres de réaction (100, 110, 120) comprend des entrées et/ou des sorties supplémentaires à travers lesquelles des substances peuvent être introduites et/ou évacuées.

8. Réacteur à agitation selon la revendication 7, dans lequel plusieurs chambres de réaction (100, 110, 120) sont reliées entre elles par des entrées et/ou des sorties supplémentaires.

9. Procédé de réalisation d'une réaction chimique, **caractérisé en ce que** la réaction est effectuée dans un réacteur à agitation selon l'une des revendications 1 à 8 et la tige d'actionnement ou les tiges d'actionnement (500, 510, 520) sont actionnées avec un mouvement de va-et-vient entre la première position et la deuxième position.

10. Procédé selon la revendication 9, dans lequel la réaction est réalisée au moins temporairement avec une quantité constante de substances introduites dans le réacteur et évacuées du réacteur.

11. Procédé selon la revendication 9, dans lequel, dans le réacteur, des substances sont introduites et évacuées lorsque la tige d'actionnement ou les tiges d'actionnement (500, 510, 520) se trouvent dans la première position et aucune substance n'est introduite ni évacuée lorsque la tige d'actionnement ou les tiges d'actionnement (500, 510, 520) se trouvent dans la deuxième position.

12. Procédé selon l'une des revendications 9 à 11, dans lequel le réacteur à agitation est un réacteur à agitation selon la revendication 8, dans au moins une chambre de réaction (100, 110, 120), au moins un état de fonctionnement est surveillé, dans le cas d'un écart prédéterminé de l'état de fonctionnement par rapport à une valeur prédéterminée pour cet état de fonctionnement, les entrées débouchant dans cette chambre de réaction sont fermées et les substances transportées initialement à travers des entrées sont introduites dans une autre chambre de réaction.

13. Procédé selon la revendication 12, dans lequel l'état de fonctionnement surveillé est la chute de pression entre une chambre de réaction (100, 110, 120) et la chambre de réaction adjacente.

14. Utilisation d'un réacteur à agitation selon l'une des revendications 1 à 8 pour la réalisation de réactions chimiques.
